# EUROPÄISCHE PATENTSCHRIFT

(11) **EP 0 721 574 B1**
(45) Veröffentlichungstag und Bekanntmachung des Hinweises auf die Patenterteilung: **04.11.1998**
(21) Anmeldenummer: 94924209.3
(22) Anmeldetag: 25.08.1994
(51) Int. Cl.: G01J 1/04, G01J 1/42

(54) **SENSOR ZUM ERFASSEN VON ELEKTROMAGNETISCHER STRAHLUNG**
SENSOR FOR DETECTING ELECTROMAGNETIC RADIATION
SYSTEME PERMETTANT DE DETECTER UN RAYONNEMENT ELECTROMAGNETIQUE

(30) Priorität: 02.09.1993 DE 4329665
(43) Veröffentlichungstag der Anmeldung: 17.07.1996
(73) Patentinhaber: SE Scientific Electronics Munchen GmbH, D-81247 München (DE)
(72) Erfinder: NÄBAUER, Anton, D-80905 München (DE); BERG, Peter, D-81247 München (DE)
(86) Internationale Anmeldenummer: DE9400984
(87) Internationale Veröffentlichungsnummer: WO9506861

(56) Entgegenhaltungen:
- DE-A- 2 816 017
- DE-A- 3 922 153
- US-A- 3 371 213
- PATENT ABSTRACTS OF JAPAN vol. 14, no. 309 (P-1071) (4252) 4. Juli 1990 & JP,A,02 099 835 (HAMAMATSU PHOTONICS) 11. April 1990
- JOURNAL OF ELECTRONIC MATERIALS, Bd.22, Nr.5, Mai 1993 Seiten 445 - 451 ICHINO ET AL. 'ULTRAVIOLET SEMICONDUCTOR LASER STRUCTURES WITH PSEUDOMORPHIC ZnCdSSe QUARTERNARY ALLOYS ON GaP SUBSTRATES' in der Anmeldung erwähnt

## Beschreibung

Die vorliegende Erfindung behandelt einen Sensor zum Erfassen von elektromagnetischer Strahlung, bei dem die Abhängigkeit des Sensorsignals von der Einfallsrichtung der auf den Detektor fallenden Strahlung sehr gering ist. Eine bevorzugte Anwendung ergibt sich in einem Gerät, mit dem die Belastung eines Körpers durch ultraviolette Strahlung, die von der Sonne oder künstlichen Lichtquellen ausgeht, überwacht wird und das ein Warnsignal bei Überschreiten eines benutzerindividuellen Grenzwerts abgibt.

Mit dem Auftreten des Ozonlochs wird es zunehmend wichtiger, Schutzmaßnahmen vor Schäden, die durch hohe UV-Strahlungsbelastung (zum Beispiel Sonnenbrand, Hautkrebs, Schäden an den Augen ...) entstehen, zu treffen. Mögliche Schutzmaßnahme sind beispielsweise die Verwendung von Sonnenschutzmitteln und die Einschränkung der Expositionszeit, die zum Beispiel mit Hilfe von Tabellen, die in Abhängigkeit vom Hauttyp eine Zeitdauer für die maximale empfohlene tägliche Sonnenbestrahlung angeben, ermittelt werden kann. Derartige Tabellen können jedoch nur einen groben Richtwert geben, da die Abhängigkeit der Intensität der Sonnenbestrahlung von der Tageszeit, den Wetterbedingungen (Bewölkung, Dunst ...) und den Umgebungsbedingungen (Wasser, Hochgebirge, Schnee ...) nur unzureichend berücksichtigt werden können.

Um die tatsächliche Intensität der Strahlung zu berücksichtigen, kann die Verfärbung photochromer Materialien zur Ermittlung der Strahlungsbelastung herangezogen werden ("Reusable Radiation Detector" US-Patent 4 130 760).
Eine andere, wesentlich genauere Möglichkeit der Überwachung der Belastung durch ultraviolette Strahlung können elektronische Geräte leisten, die mit Hilfe eines speziellen Sensors die tatsächliche Intensität der ultravioletten Strahlung messen. Ein Sensor für ein derartiges Gerät ist Gegenstand der vorliegenden Erfindung.

Schon vor über 20 Jahren wurden elektronische Strahlungsmeßgeräte, die vor hoher Sonnenbestrahlung schützen sollen, beschrieben.
Im US-Patent 3710115 (1973) beschreibt Jubb ein Sonnenbrand-Warngerät ("Sunburn Warning Device Comprising Detecting the Ultraviolet Component of Solar Radiation"), bei dem die momentane Strahlungsdosis mit Hilfe eines analogen Meßgeräts angezeigt werden kann und das bei Überschreiten einer bestimmten Strahlungsdosis ein akustisches Warnsignal abgeben kann.

Im US-Patent 3 917 948 (1975) beschreibt Strutz ein Dosis-Meßgerät ("Device for Measuring the Dose of Ultraviolet Radiation in the Erythem-Effective Range"), das einen Oszillator enthält, bei dem ein Photowiderstand das frequenzbestimmende Glied darstellt. Ein nachgeschalteter elektronischer Zähler zählt die Impulse dieses Oszillators und löst bei Erreichen einer bestimmten, voreingestellten Gesamtzahl an Impulsen einen Alarm aus.
Tulenko beschreibt im US-Patent 4229733 (1980) ein Strahlungsmeßgerät ("Exposure Detecting Device"), bei dem ein Dosissignal ermittelt wird, das während der Bestrahlung erwartungsgemäß ansteigt, bei fehlender Bestrahlung aber wieder abfällt. Hierdurch soll die Regeneration der Haut berücksichtigt werden.
Die Regenerationsfähigkeit der Haut kann auch das in PCT-Anmeldung WO86/03319 beschriebene UV-Strahlungsüberwachungsgerät ("Ultraviolet Monitoring Device") berücksichtigen.
Im US-Patent 4 428 050 (1984) ist von Pellegrino ein Gerät beschrieben, das insbesondere beim Solariumbesuch die Strahlungsbelastung und die Bräunung überwachen soll ("Tanning Aid"): Ein Computer (Mikroprozessor) ermöglicht es bei diesem Gerät unter anderem, Hauttyp, Lichtschutzfaktor einer Sonnencreme, anfängliche Hautbräunung sowie die Bestrahlungsseite (Bauch/Rücken) zu berücksichtigen. Weiterhin wird in dieser Erfindung beschrieben, daß die Strahlung für UV-A, UV-B und UV-C mit Hilfe mehrerer Lichtdetektoren und entsprechender vorgeschalteter Filter getrennt überwacht werden kann.
Im US-Patent 4 535 244 beschreibt Burnham ein tragbares Dosimeter mit Sensor, Mikroprozessor und Anzeige. Durch eine Tastatur können Parameter wie zum Beispiel Lichtschutzfaktor der Sonnencreme eingegeben werden.
Burnham entwickelte das Dosimeter weiter und meldete ein weiteres US-Patent (4 608 492: "Ultraviolet Monitor Suntan Alarm with Self Test Routines") an, bei dem der Mikroprozessor laufend die Funktion des Geräts überprüft und unter anderem vor Abschattung des Sensors warnt.
Ein ähnliches Dosimeter, das in der Bedienung bezüglich der Eingabe des Lichtschutzfaktors weiterentwickelt wurde, ist in US-Patent 4 962 910 (1990) von Shimizu beschrieben.
Im US-Patent 5 008 548 (1991) beschreibt Gat ein tragbares Strahlungsmeßgerät ("Personal UV Radiometer"), mit dem gleichzeitig Dosis und Dosisleistung der Strahlung gemessen werden können. Darüber hinaus wird auf die Notwendigkeit hingewiesen, für genaue Messungen das Strahlungsmeßgerät in Richtung maximaler Strahlungsintensität auszurichten.

Zum besseren Verständnis der Erfindung wird darauf hingewiesen, daß der Bereich der ultravioletten Strahlung üblicherweise unterteilt wird in UV-A, UV-B und UV-C.
Im UV-A Bereich (Wellenlänge 315 bis 400 nm) verursacht zu hohe Strahlungsbelastung eine schnellere Alterung der Haut, wobei die minimale Erythem-Dosis (MED; Strahlungsdosis, ab der eine Rötung der Haut festgestellt werden kann) bei ca. 25 J/cm² liegt. Der Anteil dieser UV-A Strahlung im natürlichen Sonnenspektrum beträgt ca. 4 %.
Wesentlich gefährlicher ist UV-B-Strahlung (Wellenlänge 280 nm bis 315 nm), die als Verursacher von Hautkrebs und Sonnenbrand gilt. Diese Strahlung hat einen Anteil von ca. 0,4 % im natürlichen Sonnenspektrum und kann schon bei sehr geringen Dosen Hautreizungen verursachen (MED liegt bei ca. 25 mJ/cm²).
Licht im UV-C-Bereich (Wellenlängen unter 280 nm) wird in der Atmosphäre so gut wie vollständig absorbiert.

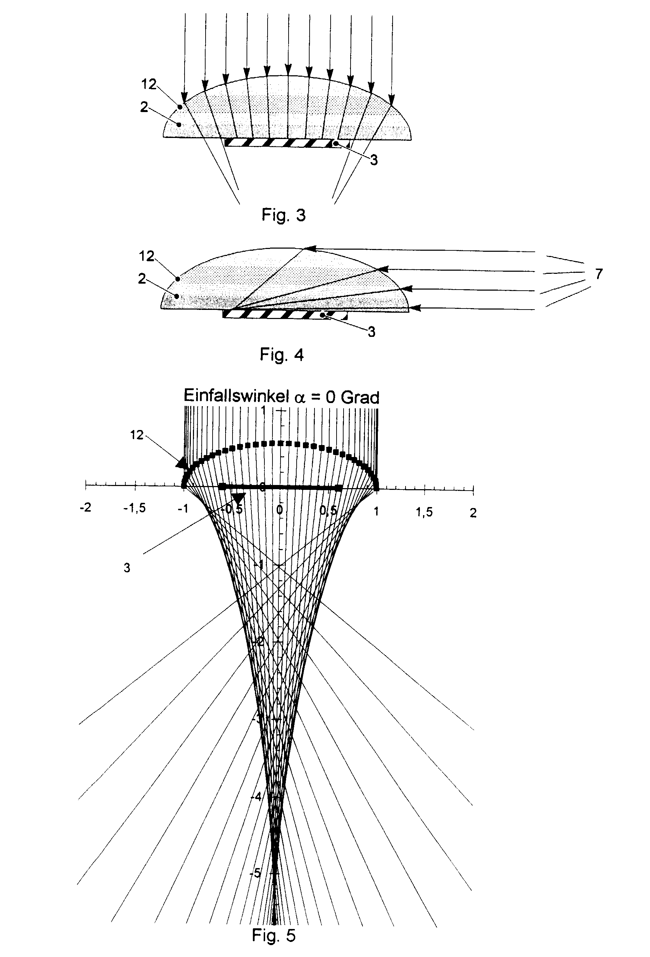

Ein Problem beim praktischen Einsatz von UV-Strahlungsmeßgeräten stellt die Abhängigkeit der Strahlungsintensität von der Winkelverteilung dar, mit der die Strahlung auf den Photodetektor trifft. Im US-Patent 5 008 548 wurde vorgeschlagen, den Photodetektor in Richtung maximaler Strahlungsintensität auszurichten. Bei vielen Anwendungen ist jedoch eine derartige Ausrichtung des Photodetektors nicht oder zumindest nicht ohne weiteres möglich.
Die Erfindung gemäß Patent DE 39 22 153 "Optischer Sensor" beruht ganz wesentlich auf der Tatsache, daß in Linsenmitte senkrecht einfallende Strahlen nicht auf den Sensor gelenkt, sondern zerstreut werden (siehe hierzu Fig. 3 d dieser Patentschrift). Um diese negative Brennweite in Linsenmitte zu erreichen, wird ein ellipsoidförmiger Hohlraum benötigt, der als wesentliches Merkmal dieser Erfindung im Hauptanspruch genannt wird, das heißt, die Aufgabenlösung dieser Schrift wird realisiert durch die Kombination eines Linsenkörpers mit ellipsoidförmiger Außenseite und einem ellipsoidförmigen Hohlraum. Als nachteilig erweist sich hierbei unter anderem der Umstand, daß die Herstellung dieses Linsenkörpers sehr aufwendig ist, da in den Linsenkörper ein Hohlraum eingebracht sein muß und die optisch relevanten Grenzflächen ellipsoidförmig gefertigt werden müssen. Insbesondere bei geringen Linsengrößen von wenigen Millimetern und darunter (beispielhafte Größe 1 mm) ist dieser Linsenkörper nur mit erheblichem technischen und kostenmäßigen Aufwand zu realisieren.
Aufgabe der vorliegenden Erfindung ist es daher, bei einem Sensor zum Erfassen von elektromagnetischer Strahlung mit einem Detektor zum Erfassen der Strahlung die Abhängigkeit des Sensorsignals vom Einfallswinkel der auf den Detektor fallenden Strahlung durch eine andere technische Realisierung zu reduzieren.

Die Aufgabe wird gemäß Patentanspruch 1 dadurch gelöst, daß
- eine Linse oder ein Linsensystem mit ausschließlich positiver Brennweite vorhanden ist,
- die Linse oder das Linsensystem im Strahlengang vor dem Detektor angeordnet ist,
- der Detektor im Strahlengang vor dem Brennpunkt angeordnet ist, der sich bei im Randbereich der Linse oder des Linsensystems unter dem Einfallswinkel von α *=* 0° einfallender Strahlung ergibt,
- Anordnung und Empfindlichkeitsbereiche des Detektors so gewählt sind, daß bei Strahlungseinfall unter einem Einfallswinkel von α = 0° nur ein Teil der durch die Linse oder das Linsensystem einfallenden Strahlung erfaßt wird.

Bei dem erfindungsgemäßen Sensor wird mit zunehmendem Einfallswinkel die Fokussierung auf den strahlungsempfindlichen Bereich verbessert, so daß in einem großen Winkelbereich der Effekt weitgehend kompensiert werden kann, daß bei zunehmendem Winkel zwischen Linsenachse und Strahlen weniger Strahlen auf den Sensor treffen.

Vorteilhafte Weiterbildungen der Erfindung ergeben sich aus den abhängigen Ansprüchen.

Dadurch, daß die Linse beziehungsweise mindestens eine Linse des Linsensystems mindestens eine konvexe Linsenfläche aufweist, die eine von der Linsenachse zum Linsenrand hin zunehmende Krümmung besitzt, kann die oben dargestellte Kompensation durch verbesserte Fokussierung der Strahlung auf den Detektor verstärkt werden.

Das gleiche gilt, wenn die Linse beziehungsweise mindestens eine Linse des Linsensystems mindestens eine konkave Linsenfläche (zum Beispiel bei einer Meniskuslinse) aufweist, bei der die Krümmung von der Linsenachse zum Linsenrand hin abnimmt.

Die Linse beziehungsweise das Linsensystem kann im einfachsten Fall eine einfache Sammellinse sein. Bei Sammellinsen kann man zwischen plankonvexen Linsen, bikonvexen Linsen, oder Meniskuslinsen unterscheiden. Besonders vorteilhaft erweist sich die Verwendung einer plankonvexen Linse, weil diese mit der flachen Seite direkt in Kontakt mit der Oberfläche des Detektors gebracht werden kann, so daß der Detektor eine maximale Apertur erreicht und Strahlen aus einem großen Winkelbereich auf den Detektor treffen.

Aus fertigungstechnischen Gründen ist es besonders vorteilhaft, wenn der Detektor direkt in das Material, aus dem die Linse besteht, eingebettet ist, wodurch der Sensor kompakt, leicht und kostengünstig herstellbar wird.

Mit Hilfe von an beliebigen Stellen innerhalb des Sensors angebrachten Blenden kann die Winkelabhängigkeit der Empfindlichkeit des Sensors gezielt beeinflußt werden.

Vorteilhafterweise kann der hier beschriebene Sensor in einem UV-Strahlungsmeßgerät eingesetzt werden, bei dem Strahlung aus einem möglichst großen Bereich von Einfallswinkeln möglichst mit gleicher Empfindlichkeit gemessen werden soll.

Weitere Einzelheiten, Aspekte und Vorteile der vorliegenden Erfindung ergeben sich aus den nachfolgenden Beschreibungen unter Bezugnahme auf die Zeichnung.

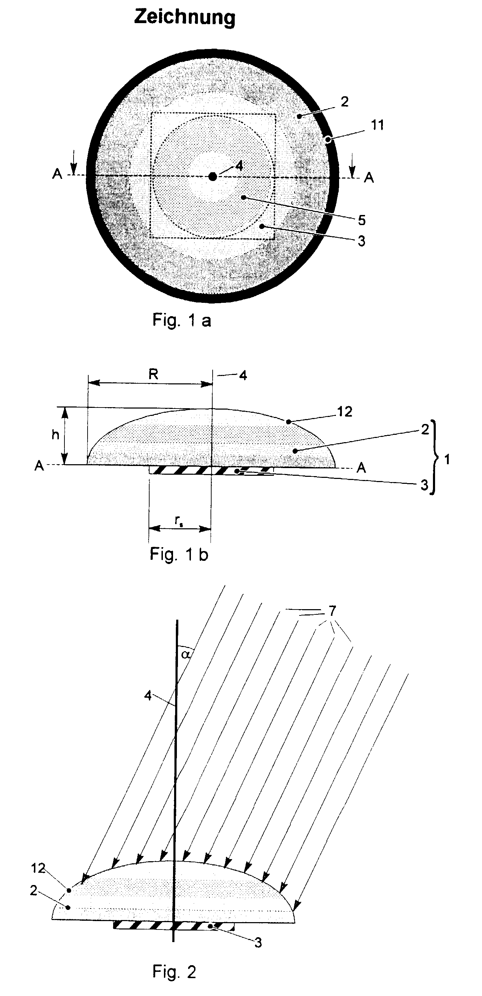

- Fig. 1 a:: Erfindungsgemäßer Sensor einer Ausführungsform in Draufsicht
- Fig. 1 b:: Sensor von Fig. 1 a im Schnitt A-A
- Fig. 2:: Sensor von Fig. 1 b mit Definition des Einfallswinkels α
- Fig. 3:: Sensor von Fig. 1 b unter Einfall von Strahlung mit Einfallswinkel α = 0°
- Fig. 4:: Sensor von Fig. 1 b unter Einfall von Strahlung unter einem Einfallswinkel α = 90°
- Fig. 5:: Computersimulation des Strahlengangs bei Einfallswinkel α = 0° für Linse mit den Parametern h = 0,57·R; rₛ = 0,6·R
- Fig. 6:: Computersimulation des Strahlengangs bei Einfallswinkel α = 45° für Linse mit den Parametern h = 0,57·R; rₛ = 0,6·R
- Fig. 7:: Computersimulation des Strahlengangs bei Einfallswinkel α = 75° für Linse mit den Parametern h = 0,57 R; rₛ = 0,6 R
- Fig. 8:: Computersimulation des Strahlengangs bei Einfallswinkel α = 90° für Linse mit den Parametern h = 0,57 R; rₛ = 0,6 R
- Fig. 9 a:: Sensor nach Fig. 1 b mit Bereichen verminderter Strahlungempfindlichkeit im Schnitt A-A

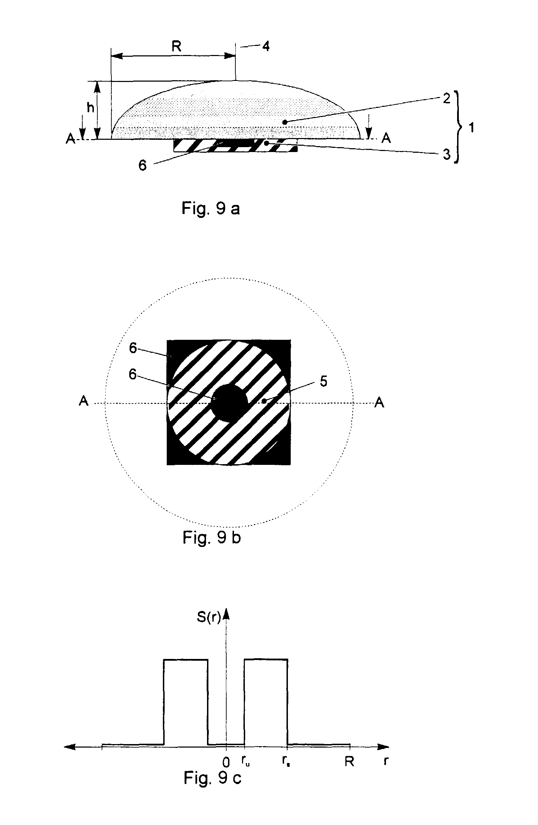

- Fig. 9 b:: Sensor nach Fig. 9 a mit Bereichen verminderter Strahlungempfindlichkeit in Draufsicht
- Fig. 9 c:: Radiale Empfindlichkeit des Detektors in Fig. 9 a im Schnitt A-A

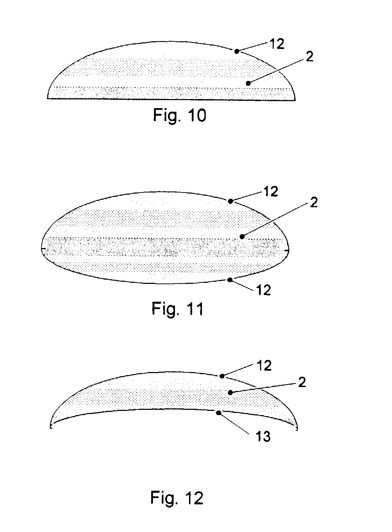

- Fig. 10:: Plankonvexe Ausführungsform der Linse
- Fig. 11:: Bikonvexe Ausführungsform der Linse
- Fig. 12:: Ausführungsform der Linse als Meniskuslinse

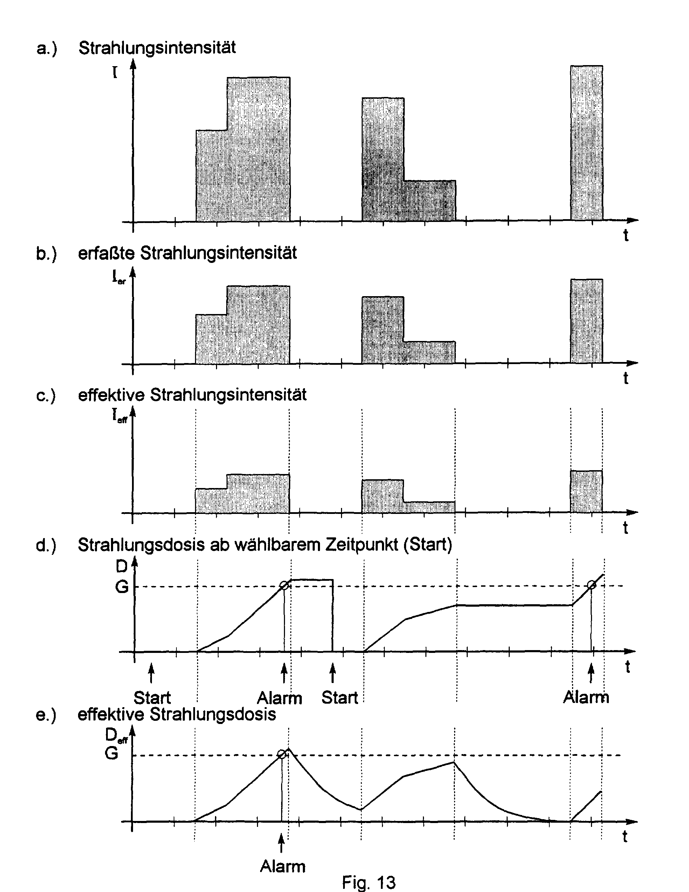

- Fig. 13:: Veranschaulichung der Begriffe Strahlungsintensität (Fig. 13 a), erfaßte Strahlungsintensität (Fig. 13 b), effektive Strahlungsintensität (Fig. 13 c), Strahlungsdosis (Fig. 13 d) und effektive Strahlungsdosis (Fig. 13 e) anhand einer beliebigen Einstrahlung über der Zeit

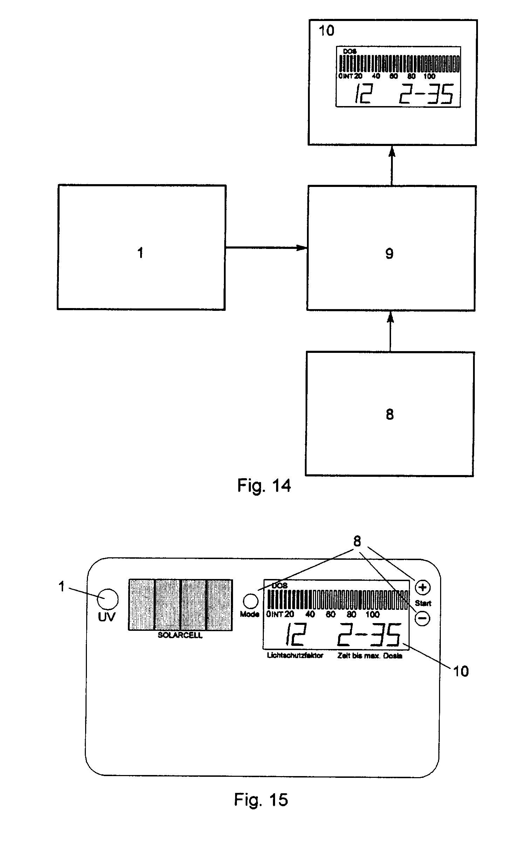

- Fig. 14:: Blockschaltbild des Strahlungsmeßgeräts
- Fig. 15:: Strahlungsmeßgerät in Form einer Scheckkarte

Bei der vorliegenden Erfindung wird in einer ersten Ausführungsform ein spezielles Optik-Detektor-System (wird künftig als "Sensor" bezeichnet) vorgeschlagen, bei dem die Strahlung aus einem möglichst großen Raumwinkelbereich (im Extremfall werden 360° gewünscht; in der Praxis genügen meist 120° bis 180°; 180° können mit einem erfindungsgemäßen Sensor erreicht werden) auf die strahlungsempfindliche Fläche des Detektors gelenkt wird. Damit ist nur noch eine grobe Ausrichtung des Detektors in Richtung der Strahlungsquelle erforderlich. Darüber hinaus wird durch diese Erfindung auch bei diffuser Strahlung eine hohe Meßgenauigkeit erreicht.

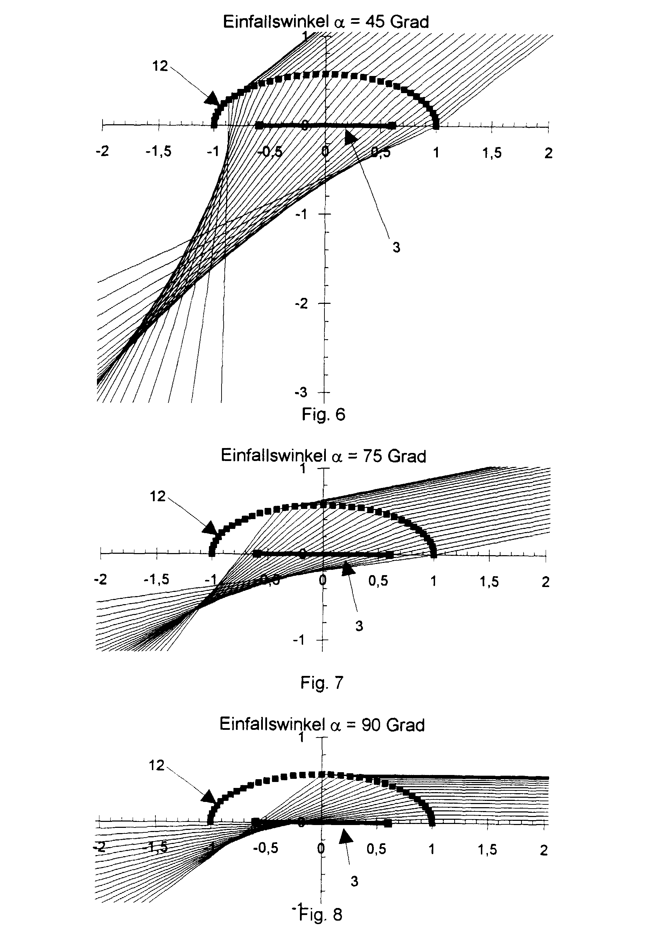

Wie in Fig. 1 zu ersehen, ist als Randbereich 11 der Linse der Bereich definiert, der bei Sicht auf die Linse unter Winkel von 0 Grad am weitesten von der Linsenachse enffernt ist. Gestrichelt ist in Fig. 1 a der Photodetektor 3 sowie der Rand des strahlungsempfindlichen Bereichs 5 des Photodetektors eingezeichnet. Im Schnitt A-A ist der Sensor im Querschnitt zu sehen.
Der Abstand zwischen Detektor und Linse ist geringer als die Brennweite für parallel zur Linsenachse im Randbereich 11 (vergleiche Fig. 1 a) der Linse einfallendes Licht. Der Detektor ist hierbei also nicht wie üblich im oder in der Nähe des Brennpunktes für in Linsenmitte einfallendes Licht angebracht. Wenn Strahlung unter einem Einfallswinkel α von *α =* 0° auf den Sensor fällt, ist die auf den Detektor 3 auftreffende Strahlung stark defokussiert. Der Einfallswinkel α ist gemäß Fig. 2 definiert als Winkel zwischen Linsenachse und einfallendem Strahl.
Wie in Fig. 4 ersichtlich ist, wird die Größe des strahlungsempfindlichen Bereichs des Detektors so gewählt, daß bei Strahlungseinfall unter einem Einfallswinkel α *=* 0° nur ein Teil der durch die Linse einfallenden Strahlen den sensitiven Bereich des Detektors erreicht. Dadurch wird ermöglicht, daß mit zunehmendem Einfallswinkel α zwischen Linsenachse 4 und Strahlen 7 (vergleiche Fig. 3) der auf den strahlungsempfindlichen Bereich 5 des Detektors 3 treffende Anteil aller in die Linse beziehungsweise Linsensystem 2 einfallender Strahlen zunimmt, da sich die Fokussierung der Lichtstrahlen auf den Detektor 3 verbessert (siehe hierzu Fig. 5). Diese Verbesserung der Fokussierung mit zunehmendem Einfallswinkel α wird auch in den in Fig.6 bis 9 dargestellten Computersimulationen des Strahlengangs veranschaulicht. Hierdurch kann in einem großen Winkelbereich der Effekt weitgehend kompensiert werden, daß bei zunehmendem Winkel zwischen Linsenachse und Strahlen weniger Strahlen auf den Sensor treffen.

Die oben dargestellte Kompensation durch verbesserte Fokussierung der Strahlung auf den Detektor 3 kann dadurch verstärkt werden, daß die Linse beziehungsweise mindestens eine Linse des Linsensystems mindestens eine konvexe Linsenfläche aufweist, die eine von der Linsenachse4 zum Linsenrand 11 hin zunehmende Krümmung aufweist (vergleiche Fig. 10 bis 12).
Sofern die Linse beziehungsweise mindestens eine Linse des Linsensystems mindestens eine konkave Fläche (zum Beispiel eine Meniskuslinse) aufweist (vergleiche
Fig. 12), kann eine Verstärkung der Kompensation auch dadurch erreicht werden, daß die Krümmung der konkaven Linsenfläche von der Linsenachse 4 zum Linsenrand 11 hin abnimmt.

Die Linse beziehungsweise das Linsensystem 2 kann im einfachsten Fall eine einfache Sammellinse sein. Bei Sammellinsen kann man zwischen plankonvexen Linsen (Fig. 10), bikonvexen Linsen (Fig. 11), oder Meniskuslinsen (Fig. 12) unterscheiden. Besonders vorteilhaft erweist sich die Verwendung einer plankonvexen Linse, die mit der flachen Seite direkt in Kontakt mit der Oberfläche des Detektors 3 gebracht werden kann, so daß der Detektor eine maximale Apertur erreicht, und Strahlen aus einem großen Winkelbereich auf den Detektor treffen.
Bei dem erfindungsgemäßen Aufbau hängt die optimale Form der Linse (Radius, Dicke, Krümmung...) unter anderem vom Brechungsindex des Linsenmaterials ab. Für einen Brechungsindex von 1,4 wurden beispielhaft sehr gute Resultate mit einer asphärischen plankonvexen Linse erzielt, deren Querschnitt eine halbe Ellipse darstellt und deren Dicke (h) beim 0,57 fachen Radius (R) der Linse liegt. Der kreisförmige lichtempfindliche Bereich 5 des darunterliegenden Detektors 3 soll in diesem Fall einen Radius (rₛ) von etwa dem 0,6fachen Linsenradius R aufweisen. Die Computersimulationen des Strahlengangs bei diesen Parametern in Fig. 6 bis 9 zeigen deutlich, daß mit wachsendem Einfallswinkel α ein immer größerer Anteil der in die Linse einfallenden Strahlen auf den strahlungsempfindlichen Bereich 5 des Detektors auftrifft. Die für den jeweiligen Anwendungsfall optimalen Parameter (genaue Linsenform, Größe des Detektors...) können unter Berücksichtigung der jeweiligen Randbedingungen vorteilhafterweise durch Computersimulation des Strahlenganges ermittelt werden.

In einer zweiten Ausführungsform ist der Detektor 3, wie bei lichtemittierenden Dioden (LED) üblich, direkt in das Material, aus dem die Linse besteht, eingebettet. Anders als bei LEDs, bei denen der Halbleiter in der Nähe des Brennpunkts der Optik angeordnet ist, ist der Detektor bei der vorliegenden Erfindung so anzuordnen, daß Strahlen aus einem möglichst großen Bereich von Raumrichtungen mit näherungsweise gleicher Wahrscheinlichkeit auf den Detektor 3 treffen; dies ist, wie oben beschrieben, der Fall, wenn der Detektor vor dem Brennpunkt (Brennpunkt bei Lichteinfall unter einem Einfallswinkel α = 0° im Linsenrand) angeordnet ist.

Ein Freiheitsgrad für die Beeinflussung der Winkelabhängigkeit der Empfindlichkeit des Sensors liegt darin, die Empfindlichkeit S(r) des erfindungsgemäß angebrachten Detektors 3 radial zu variieren (siehe Fig. 9). So können beispielsweise durch spezielle Beschichtungen bestimmte Bereiche abgedeckt und dadurch weniger empfindlich gemacht werden; weiterhin besteht die Möglichkeit, durch Anordnung der Elektroden sowie der Dotierungsgebiete die Empfindlichkeit bestimmter Bereiche des Detektors 3 gezielt zu beeinflussen. Um dies zu erreichen, können auch an beliebigen Stellen innerhalb des Sensors Blenden angebracht werden, die einen Teil der Strahlung daran hindern, den strahlungsempfindlichen Bereich des Detektors zu erreichen.
Mit den oben erwähnten Parametern h = 0,57·R, rₛ = 0,6·R wurde gefunden, daß durch Abdecken des mittleren Bereichs (kreisförmiger Bereich mit Radius rᵤ=0,15·R) des Detektors 3 die unter Einfallswinkel α=0° einfallende Strahlung deutlich schwächer bewertet wird, während unter großen Winkeln zur Linsenachse einfallende Strahlung fast unvermindert bewertet wird. Ein Entwurf dieser dritten vorteilhaften Ausführungsform ist Fig. 9 zu entnehmen. Bei der hier dargestellten Möglichkeit, die Abhängigkeit der Empfindlichkeit des Sensors vom Einfallswinkel der Strahlung gezielt zu beeinflussen, ist man nicht auf zylindersymmetrische Anordnungen beschränkt, so daß damit auch eine nicht zylindersymmetrische Abhängigkeit der Empfindlichkeit des Sensors von der Einfallsrichtung erreicht werden kann.
Die hier dargestellten Möglichkeiten der Beeinflussung der Abhängigkeit der Empfindlichkeit des Sensors vom Einfallswinkel kann nicht nur zur Erreichung einer für alle Einfallsrichtungen möglichst homogenen Empfindlichkeit genutzt werden, sondern auch gezielt dazu, den Sensor für bestimmte Raumrichtungen empfindlich beziehungsweise unempfindlich zu machen. Bei der Suche nach den für bestimmte Anwendungszwecke geeigneten Linsenformen, Empfindlichkeitsverteilungen auf dem Detektor beziehungsweise Anordnungen von Blenden im Sensor empfiehlt sich eine Computersimulation des Strahlenganges.

In einer bevorzugten Anwendung kann der hier beschriebene Sensor in einem UV-Strahlungsmeßgerät eingesetzt werden, bei dem Strahlung aus einem möglichst großen Bereich von Einfallswinkeln möglichst mit gleicher Empfindlichkeit gemessen werden soll. Bei derartigen Meßgeräten besteht die Aufgabenstellung, die UV-Strahlung zu messen, ohne daß das Meßergebnis durch das in der Strahlungsintensität wesentlich stärkere sichtbare Licht zu sehr verfälscht wird.

Üblicherweise werden in UV-Strahlungsmeßgeräten als Detektoren Photodioden aus Silizium (Si) eingesetzt, die Strahlung mit Wellenlängen unter 1100 nm und damit auch das gesamte sichtbare Spektrum und Teile des infraroten Spektrums detektieren. Da das sichtbare und infrarote Licht im natürlichen Sonnenlicht ca. 95 % der Strahlungsenergie enthält und dieser Strahlungsanteil nicht zum Meßergebnis beitragen soll, wird in den meisten der oben angegebenen Patente der Einsatz von Filtern erwähnt, mit denen nur die UV-Strahlung herausgefiltert werden kann, um eine günstigere spektrale Empfindlichkeit des Detektionssystems zu erzielen.
Die bekanntesten optischen Filter beruhen entweder auf dem Prinzip der Absorption bestimmter Wellenlängenbereiche durch Farbstoffe oder auf dem Prinzip der Interferenz.
Erstgenannte sind zwar leicht als UV-absorbierende, aber sehr schwer als UV-durchlässige Filter herzustellen. Im europäischen Patent 0 392 442 wird ein UV-Strahlungsmeßgerät ("Ultraviolet Ray Measuring Apparatus") beschrieben, das die UV-Strahlungsintensität mit Hilfe zweier in Differenzmessung betriebener Detektoren ermittelt, von denen einer zusätzlich mit einem leicht herstellbaren UV-Strahlung-absorbierenden Filter ausgestattet ist.
Bei Interferenzfiltern, die nur Strahlung in einem bestimmten Wellenlängenbereich durchlassen, hängt die Durchlaßcharakteristik vom Einfallswinkel der Strahlung ab. Dies führt im praktischen Betrieb eines UV-Strahlungsmeßgeräts zu Verfälschungen des Meßergebnisses, da weder ein senkrechtes Auftreffen des Licht noch ein Auftreffen unter einer konstanten Winkelverteilung sichergestellt werden kann.

Insbesondere für den praktischen Betrieb tragbarer und kostengünstiger UV-Strahlungsmeßgeräte wäre es vorteilhaft, daß die dargestellten Nachteile einer herkömmlichen Photodiode mit vorgeschaltetem Filter vermieden werden und darüber hinaus ein kleiner, leichter und robuster Aufbau des gesamten Detektionssystems (Sensor) für die UV-Strahlung bewerkstelligt wird.

Bei einer vierten Ausführungsform des erfindungsgemäßen Sensors entfällt der bei UV-Meßgeräten üblicherweise verwendete Filter, darüber hinaus wird die üblicherweise verwendete Silizium-Photodiode durch einen Detektor aus einem geeigneten Halbleitermaterial ersetzt.
Es wurde gefunden, daß mit Halbleiterdetektoren auf der Basis von Galliumphosphid (GaP), schon eine deutliche Verbesserung der spektralen Empfindlichkeit gegenüber Photodetektoren aus Si-Basis erzielt werden kann. GaP ist ein Halbleiter mit Bandabstand E_{gap} ≈ 2,3 eV, der im wesentlichen Strahlung mit Wellenlängen unter 540 nm detektiert. Neben der UV-Strahlung wird bei derartig aufgebauten Photodetektoren jedoch noch ein wesentlicher Anteil des sichtbaren Lichts detektiert.
Eine weitere Verbesserung der spektralen Empfindlichkeit kann durch Verwendung von Detektoren erzielt werden, die aus Halbleitern mit einem Bandabstand von über 2,75 eV aufgebaut werden, da hier nur Lichtquanten mit einer Energie von über 2,75 eV (Wellenlänge < 450 nm) in technisch relevantem Maße Elektron-Loch-Paare generieren können, die ihrerseits durch Strommessung leicht nachgewiesen werden können. Das Maximum der Empfindlichkeit derartiger Halbleiterdetektoren liegt bei einer deutlich kürzeren Wellenlänge als der Wellenlänge, die durch den Bandabstand des Halbleiters bestimmt ist und liegt damit in der Regel im UV-Bereich.

In einer fünften Ausführungsform wird ein derartiger Detektor mit Hilfe einer Diode auf der Basis von Siliziumkarbid (SiC) oder auf der Basis von Galliumnitrid (GaN) realisiert. SiC ist ein Halbleiter, der mit verschiedenen Gitterstrukturen hergestellt werden kann. SiC mit der technologisch gut beherrschten 6-H-Gitterstruktur (hexagonale Symmetrie) hat einen Bandabstand von E_{gap} ≈ 2,86eV (indirekter Übergang; bei 300 K), so daß Licht mit einer Wellenlänge von weniger als 430 nm einen gut meßbaren Photostrom verursacht. Es wurde gefunden, daß aus derartigem SiC aufgebaute Photodioden ihre maximale Empfindlichkeit im UV-Bereich haben. Grundsätzlich eignet sich auch SiC mit anderen Gitterstrukturen, sofern der Bandabstand bei üblichen Betriebstemperaturen ausreichend groß ist; dies trifft unter anderem bei den Strukturen 8 H (E_{gap} ≈ 2,75 eV), 21 R (E_{gap} ≈ 2,80 eV) und 15 R (E_{gap} ≈ 2,95 eV) zu. Vielfach werden blaue Leuchtdioden aus SiC (zum Beispiel 6 H) aufgebaut, die als billig herstellbare Massenprodukte direkt oder nur geringfügig modifiziert auch für einen preiswerten UV-Detektor in UV-Strahlungsmeßgeräten fungieren können.
Bei der Herstellung des Sensors ist man jedoch nicht nur auf Dioden beschränkt: Es können auch andere photosensitive Bauelemente wie Phototransistoren oder Photoleiter aus den genannten Halbleitermaterialien verwendet werden.
Bei der Auswahl des Halbleitermaterials, aus dem der UV-Detektor 3 aufgebaut ist, ist man nicht auf GaP, SiC und GaN beschränkt: Grundsätzlich eignen sich für den UV-Detektor alle Halbleiter (auch Verbindungshalbleiter) mit einem Bandabstand von über 2,25 eV. Je höher der Bandabstand des verwendeten Halbleitermaterials ist, desto mehr liegt die spektrale Empfindlichkeit eines damit aufgebauten UV-Detektors im kurzwelligen UV-Bereich und desto weniger wird sichtbares Licht und langwelliges UV-Licht detektiert, dessen Photonenenergie dann nicht mehr zur Überwindung des Bandabstands des Halbleiters (E_{gap}) ausreicht. Der zu detektierende Spektralbereich wird nicht durch Filter, sondern insbesondere durch die Auswahl eines geeigneten Halbleitermaterials, seine Dotierung und den Strukturaufbau des UV-Halbleiterdetektors bestimmt. Da der UV-B-Bereich möglichst vollständig erfaßt werden soll, ist es nicht sinnvoll, für den Detektor einen Halbleiter mit einem Bandabstand von über 4 eV zu verwenden. Mit derartigen Halbleitern aufgebaute Detektoren könnten jedoch für den UV-C-Bereich fungieren, der bei einer weiteren Zunahme des Ozonloches interessant werden könnte. Das UV-Strahlungsmeßgerät könnte dann einen speziellen Detektor aus einem Halbleiter mit über 4 eV Bandabstand enthalten, der die besonders kurzwellige UV-Strahlung detektiert. Von besonderem Interesse sind darüber hinaus Dioden, Transistoren und Photoleiter aus Galliumnitrid, einem Halbleiter, der abhängig von der Gitterstruktur einen Bandabstand im Bereich von 3,2 bis 3,5 eV (direkter Übergang) aufweist. Damit aufgebaute UV-Detektoren haben eine sehr hohe Empfindlichkeit bei der für den Menschen besonders schädlichen UV-B-Strahlung im Bereich um 300 nm, die langwelligen (> 355 bis 385 nm) UV-Strahlen tragen nur unwesentlich zum Meßergebnis bei. Dieses spektrale Verhalten des UV-Detektors ist besonders wünschenswert, da langwellige UV-Strahlen nur in erheblich größerer Strahlungsdosis Strahlungsschäden verursachen und daher bei der Intensitätsmessung der schädigenden UV-Strahlung nicht zu hoch bewertet werden dürfen.
Andere Halbleiter, die für UV-Detektoren von besonderem Interesse sind, sind die II/VI-Halbleiter auf der Basis von ZnS und diesem verwandte ternäre und quaternäre Halbleiter. Wird gegenüber ZnS bis zu 30 % des Zinks durch Cadmium ersetzt und bis zu 30 % des Schwefels durch Selen ersetzt, können Halbleiter mit Bandabständen zwischen 2,8 eV und 3,75 eV hergestellt werden (z. B. ZnS: E_{gap} ≈ 3,75 eV) (siehe z. B. K. Ichino et al., Journal of Electronic Materials, Vol. 22 No. 5, S. 455 ff 1993).

SiC wird durch seine Verwendung für blau leuchtende Dioden zunehmend preiswerter und ist daher für die Anwendung als UV-Detektor besonders attraktiv. Auch bei dem momentan noch sehr teurem GaN ist aufgrund zunehmender Anwendung auf anderen Gebieten (unter anderem auch blaue LED) in den nächsten Jahren mit einem deutlichen Preisverfall zu rechnen, so daß die Attraktivität von damit aufgebauten Photodioden für diese Anwendung steigt.

Die Verwendung eines Photodetektors aus Halbleitern mit einem Bandabstand von über 2,25 eV für den erfindungsgemäßen Sensor kann in Verbindung mit der oben beschriebenen Linse beziehungsweise Linsensystem erfolgen, sie ist jedoch nicht darauf beschränkt.

Zur Veranschaulichung der Begriffe Strahlungsintensität (Fig. 13 a), erfaßte Strahlungsintensität (Fig. 13 b), effektive Strahlungsintensität (Fig. 13 c), Strahlungsdosis (Fig. 13 d) und effektive Strahlungsdosis (Fig. 13 e) wird im folgenden Fig. 13 kurz erklärt:
Eingestrahlt wird in Abhängigkeit von der Zeit eine bestimmte Strahlungsintensität (I) (Fig. 13 a). Von dieser wird vom Detektor aufgrund der spektralen Empfindlichkeit ein Teil erfaßt, der durch die erfaßte Strahlungsintensität (I_{erf}) (Fig. 13 b) repräsentiert wird. Wenn die spektrale Empfindlichkeit des Sensors gut mit der Empfindlichkeit des bestrahlten Gewebes übereinstimmt, stellt dies eine gute Näherung für die Gewebebelastung des ungeschützten Gewebes (beispielsweise Haut ohne Sonnencreme oder Auge ohne Sonnenbrille) dar. Belastend für das Gewebe ist nur ein Teil der eingestrahlten Strahlungsintensität, nämlich der, der durch eine gegebenenfalls verwendete Sonnencreme mit einem bestimmten Lichtschutzfaktor das Gewebe erreicht. Die das Gewebe belastende Strahlungsintensität wird durch die effektive Strahlungsintensität (I_{eff}) (Fig. 13 c) angenähert, die aus der erfaßten Strahlungsintensität (I_{erf}) geteilt durch den Lichtschutzfaktor ermittelt wird. Die Strahlungsdosis (D) (Fig. 13 d) kann durch Integration der effektiven Strahlungsintensität über der Zeit ab einem wählbaren Startzeitpunkt ermittelt werden. Sie stellt ein Maß für die das Gewebe belastende Strahlungsdosis dar. Um die Regeneration des Gewebes zu berücksichtigen, kann eine effektive Strahlungsdosis D_{eff} (Fig. 13 e) ermittelt werden. Die effektive Strahlungsdosis (D_{eff}) kann ähnlich wie die Strahlungsdosis (D) durch Integration der effektiven Strahlungsintensität (I_{eff}) über der Zeit ermittelt werden, im Gegensatz dazu wird jedoch auch ein Abfall des Integrals ermöglicht, der beispielsweise exponentiell oder linear über der Zeit erfolgen kann. Wie in (Fig. 13 d und Fig. 13 e) gezeigt, wird bei Überschreiten des Grenzwertes (G) der Strahlungsdosis ein erstes Signal (Alarm) ausgelöst.

In einer weiteren bevorzugten Anwendung wird der beschriebene Sensor in einem Strahlungsüberwachungsgerät eingesetzt. Das Blockschaltbild eines derartigen Gerätes zeigt Fig. 14:
Das der erfaßten Strahlungsintensität (I_{erf}) proportionale Signal des Detektors 3 wird der Signalverarbeitung 9 zugeführt, die unter Berücksichtigung von mit Hilfe der Eingabeeinrichtung 8 festgelegter Parameter das erste Signal und/oder weitere Signale einer Ausgabeeinrichtung 10 zuführt. Diese Signale können unter anderem sein: Alarmsignal für Überschreiten des Grenzwertes (G) der Strahlungsdosis, Strahlungsintensität (I), effektive Strahlungsintensität (I_{eff}), Lichtschutzfaktor, Strahlungsdosis(D), effektive Strahlungsdosis (D_{eff}), Uhrzeit, voraussichtliche Zeit bis zum Erreichen des Grenzwertes (G) der Strahlungsdosis.
Da die digitale Verarbeitung der analogen in vielen Punkten überlegen ist, kann die Signalverarbeitung 9 auch einen Analog/Digital-Wandler sowie eine digitale Verarbeitungseinrichtung umfassen. Diese können beispielsweise durch einen Mikrocontroller realisiert werden. Die Signalverarbeitung 9 enthält den Analog/Digital-Wandler sowie die digitale Verarbeitungseinrichtung. Die Signalverarbeitung ermittelt aus der zeitabhängigen Strahlungsintensität (I) die Strahlungsdosis (D). Diese wird entweder ab einem bestimmten Startzeitpunkt (ab dem Betätigen der Start-Taste) oder für einen bestimmten Zeitraum (zum Beispiel für die letzten 12 Stunden) durch Integration ermittelt. Darüber hinaus kann beim Strahlungsüberwachungsgerät auch eine effektive Strahlungsdosis (D_{eff}) berechnet werden, ein Wert, bei dem die Regeneration des bestrahlten Gewebes (zum Beispiel menschliche Haut) berücksichtigt wird. Hierfür kann die Regeneration des bestrahlten Gewebes unter Zugrundelegung einfacher Modelle näherungsweise entweder durch einen über der Zeit exponentiellen oder linearen Abfall der effektiven Strahlungsdosis (D_{eff}) berücksichtigt werden. Dank der Leistungsfähigkeit moderner Mikrocontroller können jedoch auch kompliziertere Algorithmen angewandt werden, die die Regeneration besser annähern. Übersteigt die Strahlungsdosis (beziehungsweise die effektive Strahlungsdosis) einen bestimmten über die Eingabeeinrichtung 8 individuell einstellbaren Grenzwert (G) der Strahlungsdosis (abhängig vom Gewebe, zum Beispiel Hauttyp), wird von der Signalverarbeitung das erstes Signal abgegeben und von der Ausgabeeinrichtung als akustisches und/oder optisches Signal (zum Beispiel als Alarmsignal) angezeigt.

Wie Fig. 15 beispielhaft zeigt, kann das Strahlungsmeßgerät in Größe einer Scheckkarte realisiert werden: Durch Einsatz moderner Stromspartechniken und Einsatz verbrauchsarmer CMOS-Schaltkreise ist es möglich, das Strahlungsmeßgerät ganz oder teilweise durch Solarzellen zu versorgen. Darüber hinaus verfügt das Gerät über eine Anzeige, an der die Strahlungsdosis beziehungsweise die Strahlungsintensität, der Lichtschutzfaktor sowie voraussichtliche Zeit bis zum Erreichen des Grenzwertes der Strahlungsdosis angezeigt sind. Weiterhin sind der UV-Sensor sowie Tasten für die Eingabeeinrichtung zu erkennen.

Der Gebrauchswert des beschriebenen Geräts kann durch folgende Einrichtungen noch erhöht werden.
1. Am Gerät kann der Lichtschutzfaktor des verwendeten Sonnenschutzmittels eingestellt werden. Für die Berechnung der Strahlungsdosis wird dann die effektive Strahlungsintensität verwendet, die sich aus der Strahlungsintensität geteilt durch den Lichtschutzfaktor ergibt.
2. Das Gerät kann die Zeit berechnen, die aufgrund des bisherigen Strahlungsintensitätsverlaufs und weiterer Parameter bis zur Erreichung der maximalen Strahlungsdosis vergehen wird.
3. Das Gerät enthält eine Anzeige, an der unter anderem einer oder mehrere der folgenden Werte angezeigt werden können: Strahlungsintensität, effektive Strahlungsintensität, Lichtschutzfaktor, Strahlungsdosis, effektive Strahlungsdosis, Grenzwert der Strahlungsdosis, Zeit bis zum Erreichen des Grenzwerts der Strahlungsdosis.
4. Die Energieversorgung des Geräts erfolgt ganz oder teilweise über Solarzellen.
5. Das Gerät ermittelt den Grenzwert der Strahlungsdosis unter Berücksichtigung des Hauttyps und der Vorbehandlung der Haut.
6. Das Gerät besitzt einen weiteren Integrator und ermittelt die gesamte Strahlungsdosis über einen langen Zeitraum ab einem bestimmten Zeitpunkt. Hiermit kann beispielsweise zusätzlich zur Tagesdosis die Jahresdosis ermittelt werden.
7. Das Gerät besitzt einen zusätzlichen Speicher und speichert bei jeder stärkeren Strahlungsbelastung Strahlungsintensität, Zeitpunkt, und Dauer und kann diese Daten auf Abfrage anzeigen oder ausgeben.
8. Das Gerät verfügt über eine Schnittstelle, über die es mit einem anderen Gerät Daten (beispielsweise Bestrahlungsintensität und Bestrahlungszeit) austauschen kann, die vorteilhafterweise elektrisch und/oder optisch aufgebaut ist. Der Detektor kann dabei auch als Sender und/oder Empfänger bei der optischen Übertragung fungieren.
9. Das Gerät verfügt über Stromsparfunktionen, die bei geringer Einstrahlung und dann, wenn längere Zeit keine Taste betätigt wurde, Anzeige und/oder Analog/Digital-Wandler und/oder andere Funktionsteile abschalten. Die Effektivität der Stromsparfunktionen kann noch dadurch gesteigert werden, daß der Analog/Digital-Wandler sowie die analoge Signalverarbeitung immer nur kurz zur Durchführung der Messung eingeschaltet und unmittelbar darauf wieder ausgeschaltet werden. Wurde schon über mehrere Messungen festgestellt, daß die Strahlungsintensität nur sehr gering ist (zum Beispiel nachts oder im Schatten), kann die Meßrate abgesenkt werden (beispielsweise schrittweise auf 1 Messung pro Minute). Bei Feststellung einer höheren Strahlungsintensität oder Betätigung der Eingabevorrichtung wird die Meßrate wieder auf den ursprünglichen Wert (beispielsweise 1 Messung pro Sekunde) erhöht.
10. Das Gerät verfügt über eine Einrichtung, die wichtige Betriebsparameter (Lichtschutzfaktor, Grenzwert der Strahlungsdosis (G), Hauttyp, bisherige Strahlungsdosis ...) in einem Speicher ablegt, in dem sie auch ohne Stromversorgung erhalten bleiben (zum Beispiel EEPROM).

Das Strahlungsmeßgerät kann gestaltet sein als Scheckkarte (siehe Fig. 15), in Verbindung mit Uhr/Wecker, in Armbanduhr, Krawattennadel, Schmuckstück, eingebaut in Schminkkästchen, eingebaut in Sonnenbrille, Kugelschreiber, Kühltasche, Skibrille, Skimütze, Golfsack, Deckel von Sonnenmilch, Gerät für Westentasche (Sensor schaut heraus, Gerät ist in Westentasche).

### Legende:

- 1: Sensor zum Erfassen elektromagnetischer Strahlung
- 2: Linse beziehungsweise Linsensystem
- 3: Detektor beziehungsweise Photodetektor beziehungsweise UV-Detektor
- 4: Linsenachse (optische Achse)
- 5: strahlungsempfindliche Bereiche des Detektors beziehungsweise Photodetektors
- 6: strahlungsunempfindliche Bereiche des Detektors beziehungsweise Photodetektors
- 7: einfallende Strahlung
- 8: Eingabeeinrichtung
- 9: Signalverarbeitung
- 10: Ausgabeeinrichtung
- 11: Linsen rand
- 12: konvexe Linsenfläche
- 13: konkave Linsenfläche
- α: Einfallswinkel: Winkel zwischen einfallenden Strahlen und Achse der Linse
- I: Strahlungsintensität = Intensität der Lichtquelle
- I_{erf}: erfaßte Strahlungsintensität = Strahlungsintensität die der Photodetektor erfaßt
- I_{eff}: effektive Strahlungsintensität = Strahlungsintensität geteilt durch Lichtschutzfaktor
- D: Strahlungsdosis = Integral der effektiven Strahlungsintensität über der Zeit
- D_{eff}: effektive Strahlungsdosis = Strahlungsdosis unter Berücksichtigung der Regeneration
- G: Grenzwert der Strahlungsdosis = Grenzwert der Strahlungsdosis oder der effektiven Strahlungsdosis, bei dessen Überschreiten Alarm ausgelöst wird

## Patentansprüche

1. Sensor zum Erfassen von elektromagnetischer Strahlung, insbesondere ultravioletter Strahlung, mit einem Detektor (3) zum Erfassen der Strahlung mit einer Linse oder einem Linsensystem (2) mit ausschließlich positiver Brennweite,
wobei die Linse oder das Linsensystem im Strahlengang vor dem Detektor (3) angeordnet ist,
der Detektor (3) im Strahlengang vor dem Brennpunkt angeordnet ist, der sich bei im Randbereich (11) der Linse oder des Linsensystems (2) unter dem Einfallswinkel von α = 0° einfallender Strahlung ergibt, und
Anordnung und Empfindlichkeitsbereiche des Detektors so gewählt sind, daß bei Strahlungseinfall unter einem Einfallswinkel von α = 0° nur ein Teil der durch die Linse oder das Linsensystem einfallenden Strahlung erfaßt wird.

2. Sensor nach Anspruch 1, dadurch gekennzeichnet, daß die Linse oder das Linsensystem (2) mindestens eine konvexe Linsenfläche mit einer von der Linsenachse (4) zum Linsenrand (11) hin zunehmenden Krümmung aufweist.

3. Sensor nach Anspruch 1 oder 2, dadurch gekennzeichnet, daß die Linse oder das Linsensystem (2) mindestens eine konkave Linsenfläche mit einer von der Linsenachse (4) zum Linsenrand (11) hin abnehmenden Krümmung aufweist.

4. Sensor nach einem der Ansprüche 1 bis 3, dadurch gekennzeichnet, daß die Linse oder mindestens eine Linse des Linsensystems eine plankonvexe Linse ist.

5. Sensor nach einem der Ansprüche 1 bis 4, dadurch gekennzeichnet, daß der Detektor von der Linse oder dem Linsensystem (2) umschlossen wird.

6. Sensor nach einem der Ansprüche 1 bis 5, dadurch gekennzeichnet, daß der Detektor Bereiche mit in Abhängigkeit vom Radiusvektor und/oder vom Polarwinkel unterschiedlicher Empfindlichkeit aufweist.

7. Sensor nach einem der Ansprüche 1 bis 6, dadurch gekennzeichnet, daß ein oder mehrere Bereiche des Detektors, die nicht zum Sensorsignal beitragen sollen, durch eine Beschichtung abgedeckt sind.

8. Sensor nach einem der Ansprüche 1 bis 7, dadurch gekennzeichnet, daß die Empfindlichkeit bestimmter Bereiche des Detektors durch die Anordnung der Elektroden gezielt beeinflußt wird.

9. Sensor nach einem der Ansprüche 1 bis 8, dadurch gekennzeichnet, daß im Strahlengang vor dem Detektor mindestens eine Blende vorhanden ist.

10. Sensor nach einem der Ansprüche 1 bis 9, dadurch gekennzeichnet, daß der Detektor einen Halbleiter mit einem Bandabstand von über 2,25 eV umfaßt.

11. Sensor nach Anspruch 10, dadurch gekennzeichnet, daß der Halbleiter Galliumphosphid, GaP, oder Siliziumkarbid, SiC, oder Galliumnitrid, GaN, oder Zinksulfid, ZnS, oder eine aus diesem hervorgehende ternäre oder quaternäre Zusammensetzung umfaßt, wobei bis zu 30% des Zinks durch Cadmium und bis zu 30 % des Schwefels durch Selen ersetzt werden können.

12. Sensor nach einem der Ansprüche 10 bis 11, dadurch gekennzeichnet, daß die Empfindlichkeit bestimmter Bereiche des Detektors durch die Anordnung der Dotierungsgebiete gezielt beeinflußt wird.

13. Verwendung des Sensors nach einem der vorherigen Ansprüche in einem Strahlungsmeßgerät zum Schutz vor hoher elektromagnetischer Strahlung, wobei die kürzeste detektierbare Wellenlänge im ultravioletten Bereich liegt.

## Claims

1. Sensor for detecting electromagnetic radiation, especially ultraviolet radiation, with a radiation detector (3) with a lens or a lens system (2) with an exclusively positive focal length,
in which the lens or the lens system is arranged in the radiation path in front of the detector (3),
the detector (3) is arranged in the radiation path in front of the focal point that results from a radiation impinging on the edge region (11) of the lens or the lens system (2) at an angle of incidence of α = 0°, and
arrangement and sensitive areas of the detector are chosen in such a way that only a portion of the radiation impinging on the lens or the lens system at an angle of incidence of α = 0° is detected.

2. Sensor of claim 1 in which the said lens or the said lens system (2) has at least one convex lens surface with a curvature increasing from the lens axis (4) to the lens edge (11).

3. Sensor of one of the claims 1 or 2 in which the said lens or the said lens system (2) has at least one concave lens surface with a curvature decreasing from the lens axis (4) to the lens edge (11).

4. Sensor of one of the claims 1 to 3 in which the said lens or at least one lens of the said lens system is a plano-convex lens.

5. Sensor of one of the claims 1 to 4 in which the said detector is enclosed by the lens or the lens system (2).

6. Sensor of one of the claims 1 to 5 in which the said detector has areas of different sensitivity depending on the radius vector and/or the polar angle.

7. Sensor of one of the claims 1 to 6 in which one or more areas of the said detector, which shall not contribute to the sensor signal, are covered by a coating.

8. Sensor of one of the claims 1 to 7 in which the sensitivity of certain areas of the said detector is intentionally influenced by the arrangement of electrodes.

9. Sensor of one of the claims 1 to 8 in which at least one screen exists in the radiation path in front of the said detector.

10. Sensor of one of the claims 1 to 9 in which the said detector comprehends a semiconductor with a band gap of more than 2.25 eV.

11. Sensor of claim 10 in which the said semiconductor comprehends gallium phosphide or silicon carbide or gallium nitride or zinc sulphide or any ternary or quaternary compound of these, while up to 30% of zinc can be replaced by cadmium and up to 30% of sulphur can be replaced by selenium.

12. Sensor of one of the claims 10 to 11 in which the sensitivity of certain areas of the said detector is intentionally influenced by the arrangement of doped areas.

13. Application of the sensor of one of the above-mentioned claims in a radiation monitoring device for protecting from intensive electromagnetic radiation, with the shortest wavelength detectable in the ultraviolet range.

## Revendications

1. Senseur à détecter la radiation électromagnétique, particulièrement la radiation ultraviolette, avec un détecteur (3) à détecter la radiation par une lentille ou un système de lentilles (2) à une distance focale exclusivement positive:
la lentille ou le système de lentilles est placé dans la marche des rayons devant le détecteur (3),
le détecteur (3) est placé dans la marche des rayons devant le foyer qui résulte de la radiation incidente à un angle d'incidence de α = 0° dans la périphérie (11) de la lentille ou du système de lentilles (2)
et la disposition et les domaines de sensibilité du détecteur sont choisis de sorte qu'à incidence de radiation à un angle d'incidence de α = 0° seulement une partie de la radiation incidente par la lentille ou le système de lentilles est détectée.

2. Senseur selon la revendication 1, caractérisé en ce que ladite lentille ou ledit système de lentilles (2) présente au moins une surface de lentille convexe à une courbe augmentant de l'axe de lentille (4) jusqu'à la périphérie de la lentille (11).

3. Senseur selon la revendication 1 ou la revendication 2, caractérisé en ce que ladite lentille ou ledit système de lentilles (2) présente au moins une surface de lentille concave à une courbe baissant de l'axe de lentille (4) jusqu'à la périphérie de la lentille (11).

4. Senseur selon l'une des revendications 1 à 3, caractérisé en ce que ladit lentille ou au moins une lentille dudit système de lentilles est une lentille plan-convexe.

5. Senseur selon l'une des revendications 1 à 4, caractérisé en ce que ledit détecteur est entouré par la lentille ou le système de lentilles (2).

6. Senseur selon l'une des revendications 1 à 5, caractérisé en ce que ledit détecteur présente des zones de sensibilité différente dépendant du rayon vecteur et/ou de l'angle polaire.

7. Senseur selon l'une des revendications 1 à 6, caractérisé en ce qu'un ou plusieurs zones dudit détecteur, qui ne doivent pas contribuer au signal de senseur, sont couverts par un couchage.

8. Senseur selon l'une des revendications 1 à 7, caractérisé en ce que la sensibilité de certaines zones dudit détecteur est intentionellement influencée par le groupement des électrodes.

9. Senseur selon l'une des revendications 1 à 8, caractérisé en ce qu'il y a au moins une couverture dans la marche des rayons devant ledit détecteur.

10. Senseur selon l'une des revendications 1 à 9, caractérisé en ce que ledit détecteur comprend un semi-conducteur à un intervalle d'énergie entre deux bandes de plus de 2,25 eV.

11. Senseur selon la revendication 10, caractérisé en ce que ledit semi-conducteur comprend phosphure de gallium ou carbure de silicium ou nitrure de gallium ou sulfure de zinc ou une composition ternaire ou quaternaire provenant d'un de ceux-ci - jusqu'à 30% du zinc peuvent être remplacés par cadmium et jusqu'à 30% du soufre par sélénium.

12. Senseur selon l'une des revendications 10 à 11, caractérisé en ce que la sensibilité de certaines zones dudit détecteur est intentionellement influencée par le groupement de zones de dopage.

13. L'utilisation du senseur selon une des revendications précédentes dans un radiamètre à protection contre la radiation électromagnétique intensive - à ceci la longueur d'onde la plus courte détectable se trouve dans la région ultraviolette.
